# EUROPEAN PATENT APPLICATION

(11) **EP 1 234 727 A1**
(43) Date of publication of application: **28.08.2002**
(21) Application number: 02003928.5
(22) Date of filing: 21.02.2002
(51) Int. Cl.: B60R 16/02

(54) **Wire harness arrangement for vehicle doors**

(30) Priority: 22.02.2001 JP 2001046860
(71) Applicant: Yazaki Corporation, Minato-ku, Tokyo 108-0073 (JP)
(72) Inventor: Hayashi, Michio, c/o Yazaki Parts Co., Ltd, Hiroshima-shi, Hiroshima 734-0024 (JP)
(74) Representative: Grünecker, Kinkeldey, Stockmair & Schwanhäusser Anwaltssozietät

(57) **Abstract**

A door-checker harness is provided, by which a grommet is not needed, a wiring harness at the door-side can be simply and securely connected to a wiring harness at the vehicle body-side, and the wiring harness is protected from the outside. The door-checker harness includes a door-checker bar (1), one end of which is pivotally supported by a door-facing side (3) of a vehicle body while an opposite end of which is inserted through an empty space of the door (4) so as to regulate the maximum opening ratio of the door (4), wherein the door-checker bar is formed to be a cylinder having open both ends and circuit conductors for electrically connecting a harness at the vehicle body-side to a harness at the door-side are arranged inside the door-checker bar (1). The one end of the door-checker bar is inserted in a through hole (10) at the door-facing side (3). One side of the circuit conductors is provided with a connector to be connected to a connector at the vehicle body harness-side while an opposite side of the circuit conductors is provided with a connector to be connected to a connector at the door harness-side.

## Description

### BACKGROUND OF THE INVENTION

### (1) Field of the Invention

The present invention relates to a door-checker harness, in which circuit conductors are arranged by using a door-checker bar provided in the vicinity of a door hinge, with which a door is pivotally supported by a vehicle body.

### (2) Description of the Related Art

Recently, there has been a great enhancement in the function for a side door and trunk lid of a motor vehicle and rear door of an one-box motor vehicle, and accordingly these doors have been equipped with various electric equipment such as electromotive door mirror, door mirror wiper, door speaker, window regulator motor, automatic door-locking mechanism, child-safety mechanism of door window, and door lump.

A wiring harness and the like to be connected to these electric equipment has been in advance mounted in a door body and thus such a module product has been delivered to a motor vehicle maker. In this case, the points are how the wiring harness and the like is made as a module with high productivity and how a door assembly made as a module is efficiently mounted on a vehicle body in a door-mounting step of a vehicle-assembling line at a motor vehicle maker. Of course, a process for arranging a wiring harness in a door in the vehicle-assembling step has been widely employed.

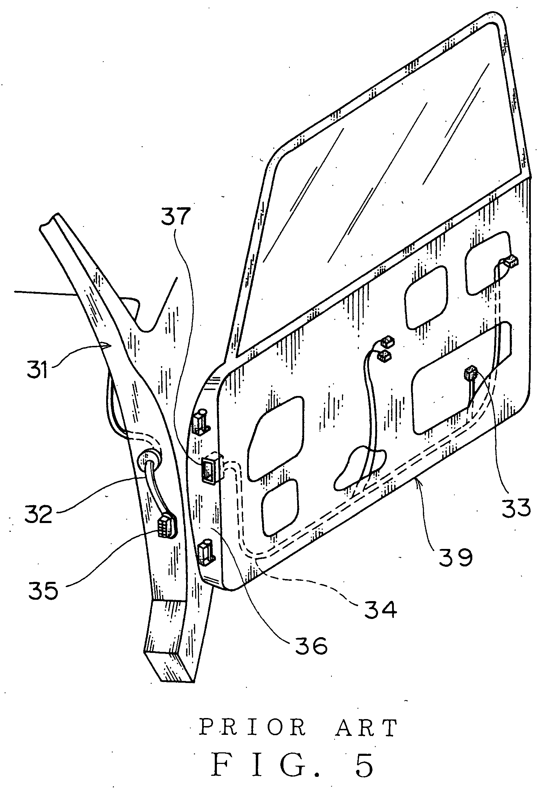

For example, in a motor vehicle, as shown in Fig. 5, in order to supply the electric current from a battery carried in an engine room to the electric equipment equipped in a door, a wiring harness 32 at the vehicle body-side, which is introduced from a front pillar 31, is electrically connected to a wiring harness 34 at the door-side having a terminal connector 33 to be connected to the electric equipment. Such an electric connection is carried out by engaging a connector 35 attached to the end of the wiring harness 32 with a connector 37 in the wiring harness 34 at a hinge side panel 36-side of a door 39.

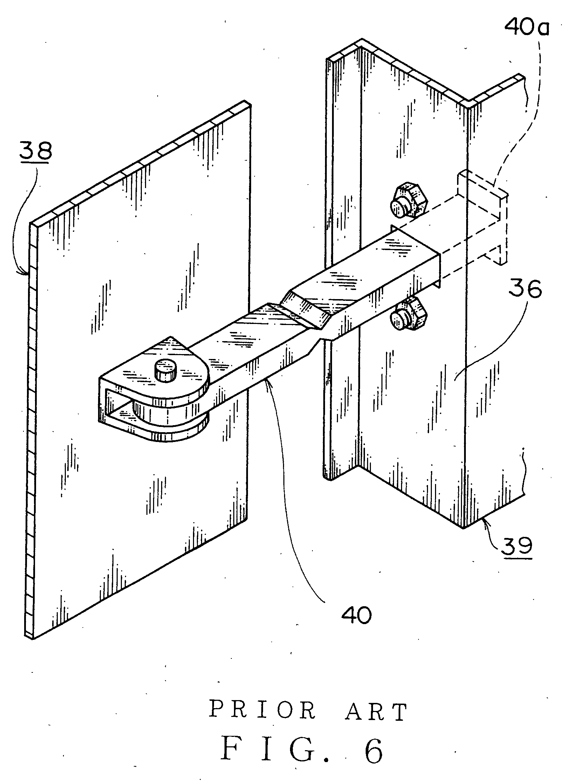

As shown in Fig. 6, a door-checker bar 40 is equipped between a vehicle body 38 and the door 39, one end of the door-checker bar 40 is pivotally supported by the vehicle body 38, and a stopper 40a protrudingly formed at another end (free end) of the door-checker bar 40 is hit against the hinge side panel 36, thereby the maximum opening ratio of the door 39 is regulated.

However, with the structure that the connector 35 at the vehicle body-side and the connector 37 at the door-side are simply connected to each other as shown in Fig. 5, even if each connector 35 and 37 is received in an empty space of the door, a part of either the wiring harness 32 at the vehicle body-side situated between the vehicle body 38 and the door 39 or the wiring harness 34 at the door-side is possibly exposed outside and accordingly exposed to rainwater, and further the coating of the wiring harness tends to be damaged due to frequent opening/closing motion of the door, causing a short circuit by infiltration of rainwater and accordingly making the electric connection unstable. Furthermore, according to circumstances, there has been a risk of having a vehicle robbery that the coating of the wire is intentionally torn to make a short circuit and to release the door lock.

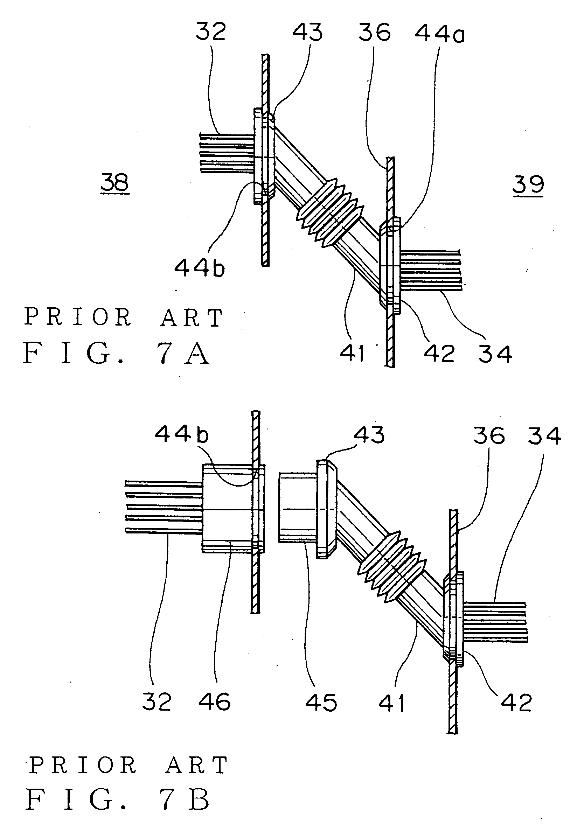

Therefore, as shown in Fig. 7, in order to avoid such a case, a waterproof structure, in which a resilient grommet 41 made of synthetic resin covers the door harness 34 for a transition part between the door 39 and the vehicle body 38, has been employed, thereby preventing the deterioration of the harness 34 due to the bending and taking a measure of waterproofing for the harness 34 and a measure against the vehicle robbery.

As shown in Fig. 7A, the grommet 41 is mounted in such a manner that flanges 42 and 43 at the end thereof are press-fit into a through hole 44a formed in the hinge side panel 36 at the door-side and a through hole 44b formed on the portion facing the door, respectively. Otherwise, as shown in Fig. 7B, a connector 45 at the door harness-side formed in a flange 43 of the grommet 41 is engaged with a connector 46 at the vehicle body harness-side formed at a through hole 44b at the vehicle body-side, thereby the electric connection is made.

However, in the conventional stricture described above, for example, a work that the diameter of the grommet 41 is enlarged so as to insert the connector 45 and the harness (a plurality of electric wires) 34 thereinto has been a time-consuming work, causing a deterioration in the productivity of the wiring harness at the door-side including the grommet 41 in a step of manufacturing the wiring harness.

Moreover, a work that the grommet 41 is inserted through the hole 44a of the door 39 has been a time-consuming work and the large force has been required to engage the flanges 42 and 43 of the grommet 41 with the holes 44a and 44b, causing a deterioration in the performance of mounting of the wiring harness on the vehicle body and the door in an assembly step of the vehicle.

That is, when the door 39 is mounted to the vehicle body 38, first the door body is provisionally mounted to the vehicle body 38 through the door hinge and then the harnesses 32 and 34 are connected for a transition part between the vehicle body 38 and the door 39. At this time, since a space between the vehicle body 38 and the door 39 is very narrow, causing the occurrence of the problems described above.

Further, since the grommet 41 tends to be damaged by a sharp tool such as a wire, therefore a shirt circuit of the electric circuit easily takes place due to an insertion of a wire and the like from a gap between the mount portion at the vehicle body-side and that at the door-side, causing a problem that the vehicle robbery cannot be avoided.

### SUMMARY OF THE INVENTION

It is therefore an objective of the present invention to solve the above problem and to provide connecting means, by which the grommet is not needed, the wiring harness at the door-side can be simply and securely connected to the wiring harness at the vehicle body-side, thereby the productivity of the wiring harness and the mounting performance of the wiring harness on the vehicle is improved, the wiring harness can be protected from the outside for the transition part between the door and the vehicle body, and the vehicle robbery by the shirt circuit of the electric circuit can be securely prevented.

In order to attain the above objective, the present invention is to provide a door-checker harness comprising a door-checker bar, one end of which is pivotally supported by a door-facing side of a vehicle body while an opposite end of which is inserted through an empty space of the door so as to regulate the maximum opening ratio of the door, wherein the door-checker bar is formed to be a cylinder having open both ends and circuit conductors for electrically connecting a harness at the vehicle body-side to a harness at the door-side are arranged inside the door-checker bar.

With the construction described above, the circuit conductors can be easily arranged in the door-checker bar, which can be easily mounted on a door body. When a door assembly having the door-checker bar made as a module is carried into a vehicle-assembling line to be mounted, the circuit conductors can be easily arranged in the vehicle-side only by pivotally supporting one end of the door-checker bar, thereby the workability of the assembling is improved. Further, since the circuit conductors is installed and protected in the door-checker bar, therefore the circuit conductors are protected from rainwater and prevented from being damaged by an edged tool and the like, thereby a stable performance of the electric connection can be realized without a short circuit of the electric circuit.

Preferably, the one end of the door-checker bar is inserted in a through hole at the door-facing side.

With the construction described above, the circuit conductors can be easily arranged in a transition part between a vehicle body and a door only by inserting one end of the door checker bar into an insertion hole formed at the door-facing side of the vehicle body, and the door-checker bar is in a state that its both ends are inserted in an empty space of the door and the vehicle body not depending on an opening angle of the door. Therefore, the circuit conductors are completely inserted in the door-checker bar, thereby preventing a door lock from abruptly being released due to an intentional short circuit of the circuit conductors from the outside by using a special tool such as a wire, that is, preventing a vehicle robbery. Further, since there is no portion exposed to rainwater, a leakage of electricity in the circuit conductors due to the deterioration can be avoided.

Preferably, one side of the circuit conductors is provided with a connector to be connected to a connector at the vehicle body harness-side while an opposite side of the circuit conductors is provided with a connector to be connected to a connector at the door harness-side.

With the construction described above, the door-checker bar, circuit conductors and connectors constitute a door-checker harness as a connection module. The circuits at the door-side and the vehicle body-side can be easily connected to each other only by mounting the door-checker harness on the transition part between the door and the vehicle body. Thus, before mounting the door-checker bar on the door, the connectors are attached to both ends of the circuit conductors arranged by being inserted in the door-checker bar, thereby the harness can be easily mounted to the door only by mounting the door-checker bar to the transition part between the door-facing side of the vehicle body and the door-side, thereby improving the workability of the assembly.

Preferably, the circuit conductors consist of busbars.

With the construction described above, the circuit conductors can be easily inserted and mounted into the door-checker bar. Further, since a busbar itself does not require a large space, it can be easily arranged even if the cross section of the empty space of the door-checker bar is small. Furthermore, the use of the busbar enables a constitution of large current-circuit such as a power supply circuit.

Preferably, the connectors provided at both sides of the busbars are mounted on the door-checker bar.

With the construction described above, since a busbar is electrically connected and attached (fixed) to a connector attached to both ends of the door-checker bar, therefore the electric wiring of the door-facing side can be easily carried out by providing the door-checker bar at the door-side, thereby improving the mounting'performance of the harness to the door.

Further, with the construction described above, the position of the busbar becomes stable and a gap between the connector and the door-checker bar disappears, thereby improving the performance of waterproofness and dust-proofing. Furthermore, the door-checker bar is stably fixed, thereby the work for fixing becomes unnecessary and a noise due to the back-lash is prevented from arising.

Preferably, the circuit conductors consist of electric wires.

With the construction described above, the internal space of the door-checker bar can be effectively used compared to a busbar, thereby enabling the densification of the electric circuit and making the insulation unnecessary. In other words, the number of the electric circuits can be increased compared to the case of the busbar and it becomes possible to handle a signal wire of small current.

Preferably, a connector provided at one end of the wires is mounted on the door-checker bar while a connector provided at an opposite end of the wires is parted away from the door-checker bar.

With the construction described above, since one end of the wires is fixed to the door-checker bar through the connector at one side of the door-checker bar, therefore the opposite end of the wires can be made free at the opposite side of the door-checker bar and the wires can have an excess length thereof, therefore the connector at the opposite side can be easily and securely connected to the harness at the door-side or the harness at the vehicle body-side.

### BRIEF DESCRIPTION OF THE DRAWINGS

Figure 1 is a perspective view illustrating a first preferred embodiment of a door-checker harness according to the present invention;
Figure 2 is a cross sectional view illustrating a mounted state of the door-checker harness taken along II - II line in Fig. 1;
Figure 3 is a perspective view illustrating a second preferred embodiment of a door-checker harness according to the present invention;
Figure 4 is a cross sectional view illustrating a mounted state of the door-checker harness taken along IV - IV line in Fig. 3;
Figure 5 is a perspective view illustrating a conventional form;
Figure 6 is a perspective view illustrating a conventional door-checker bar;
Figure 7A is a schematic view illustrating a conventional mounted state of a grommet for a transition part between a vehicle body and a door, in which the transition part is directly connected by a grommet; and
Figure 7B is a schematic view illustrating a conventional mounted state of a grommet for a transition part between a vehicle body and a door, in which the transition part is connected by a grommet through connectors.

### DESCRIPTION OF THE PREFERRED EMBODIMENTS

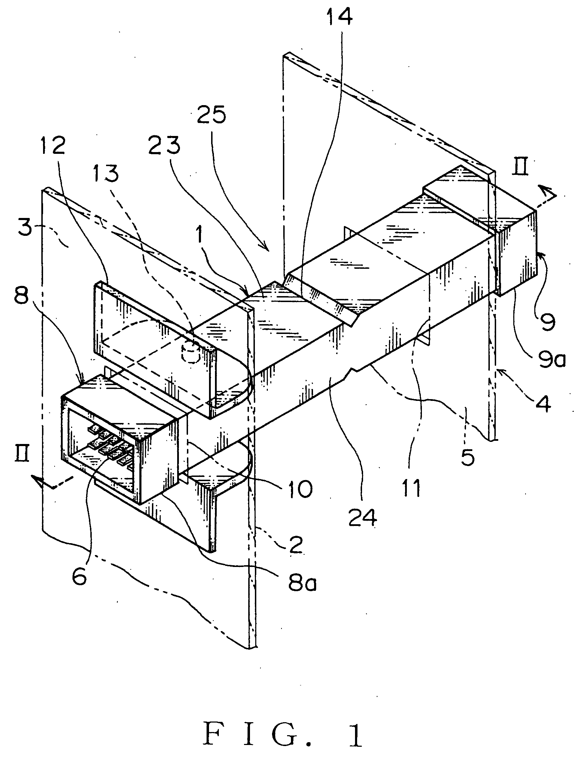

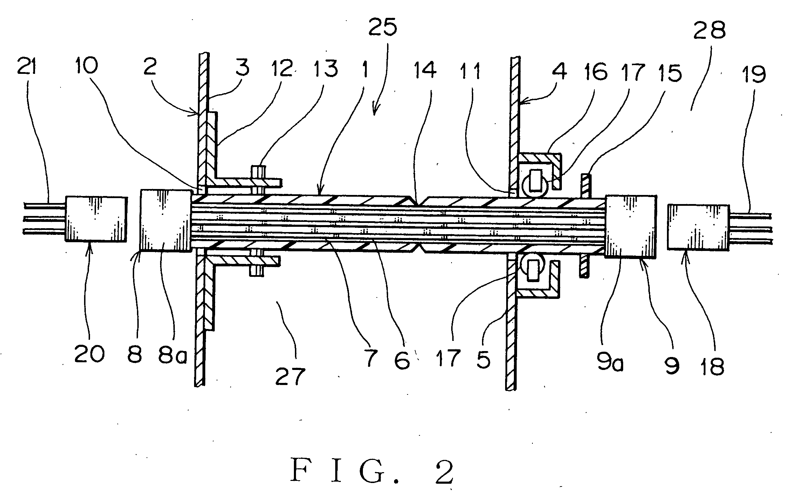

In the following, a first preferred embodiment of a door-checker harness according to the present invention will be explained with reference to Figs. 1 and 2.

Figure 1 is a perspective view illustrating the first preferred embodiment of a door-checker harness according to the present invention. Figure 2 is a cross sectional view illustrating a mounted state of the door-checker harness taken along II - II line in Fig. 1.

A door-checker bar 1, both ends of which are opened, is formed as a cylindrical body having a quadrilateral shape in the cross section thereof by thin plate working or resin forming working and is provided between a door-facing side 3 of a front pillar 2 of a vehicle body and a hinge side panel 5 of a door 4. The door-checker bar 1 has an upper wall 23, a lower wall and both side walls 24. The shape of the door-checker bar 1 is not limited to a quadrilateral shape and can be optional.

A busbar 6, which is a circuit conductor arranged by being inserted into an empty space 7 of the door-checker bar 1, is made of an electrically conductive metal and formed in a thin-width straight plate-shape. The busbar 6 is connected to a female connector 8 provided at one end of the door-checker bar 1 and a male connector 9 provided at the opposite end of the door-checker bar 1. Each connector 8 and 9 consists of the end (acting as a male terminal) of the busbar 6 and a connector housing 8a and 9a made of synthetic resin, respectively, each of which receives the end of the busbar 6 therein. The shape of the busbar 6 is not limited to a straight shape and can be optional.

If the door-checker bar 1 is made of metal, an insulating member (not shown) is provided between the busbar 6 and the door-checker bar 1 for insulation. If the door-checker bar 1 is made of synthetic resin, such insulation is not needed. The insulation between each busbar 6 can be attained by providing an air layer between each busbar 6. Otherwise, a plurality of busbar-receiving grooves (not shown) may be formed on an inner wall of the door-checker bar 1. Otherwise, a material such as an insulating bond may be injected thereinto. The busbar 6 may be arranged in a multi-stage as shown in Fig. 2 or in a single-stage.

One end of the door-checker bar 1 is inserted into a quadrilateral through hole 10 formed on the door-facing side 3 and is situated in the vehicle body in a transition part 27 (see Fig. 2), while the opposite end of the door-checker bar 1 is inserted into a quadrilateral through hole 11 formed on the hinge side panel 5 of the door 4 and is situated in an empty space 28. The one end of the door-checker bar 1 is joined to a bracket 12 attached to the door-facing side 3 by a pin 13. A notch 14 is formed at the middle position in the length direction of the door-checker bar 1 and a stopper 15 (see Fig. 2), for example, is provided in the vicinity of the opposite end of the door-checker bar 1, wherein the stopper 15 abuts against a stopper locking part 16 formed on the back surface of the hinge side panel 5. The stopper 15 may be omitted.

A guide roller 17 (see Fig. 2), which is provided inside the stopper locking part 16, abuts against the upper and lower surface of the door-checker bar 1 by a force of a spring (not shown), for example. The door 4 is pivotally supported by the door-facing side 3 through a door hinge (not shown). When the door 4 is opened or closed, the door-checker bar 1 rotates around the pin 13 in response thereto.

When the door is closed, the guide roller 17 is situated between the pin 13 and the notch 14 relatively to the door-checker bar 1, and when the door 4 is being opened, the guide roller 17 is moved right relatively to the door-checker bar 1 in Fig. 2, and when the guide roller 17 is fit into the notch 14, the intermediate position of the opening of the door 4 is determined. When the door 4 is further being opened, the stopper locking part 16 finally abuts against the stopper 15, whereby the maximum opening ratio of the door 3 is determined.

In Fig. 2, the reference numeral 18 denotes a door harness-side male connector, which receives female terminals (not shown) connected to the end of a door harness (a plurality of electric wires) 19, while the reference numeral 20 denotes a vehicle body harness-side male connector, which receives female terminals (not shown) at the end of a vehicle body harness 21, wherein the connector 18 and 20 are electrically connected to a connector 9 at the opposite end of the door-checker bar 1 and a connector 8 at the one end of the door-checker bar, respectively. By these electrical connections, the current from the battery is supplied to various electric parts on the door-side not depending on the opening angle of the door.

Upon connection between the female connector 9 and the male connector 18 and that between the female connector 8 and the male connector 20, in order to prevent rainwater from entering from the outside, a suitable sealing member is provided at each connection point and each through hole 10 and 11, thereby waterproofing treatment is carried out.

The busbar 6 is inserted into the door-checker bar 1, and each end of the busbar 6 protrudes into a connector housing 8a at one end or into a connector housing 9a at the opposite end, thereby functioning as a male terminal. Otherwise, both ends of the busbar 6, preferably resiliently, come into contact with a male terminal (not shown) received in advance in the connector housing. Thereby the door-checker harness 25 is constituted. The door-checker harness 25 functions as a module of connection.

When the door-checker bar 1 is inserted into the through hole 11 at the door-side, the door harness-side connector 18 is fit and electrically connected to the connector 9 at the opposite end, thereby the door 4 is made as a module as a sub-assembly.

When the door 4 made as a module is sent into an assembly line of a vehicle and mounted on the vehicle body, the door 4 is tentatively mounted to the door hinge (not shown), for example, the connector 8 at the one end of the door-checker bar 1 is inserted into the insertion hole 10, and a connector 20 at the vehicle body harness-side is fit to the connector 8 at the one end. Thereafter, the door-checker bar 1 is pivotally supported by a pin 13, thereby the door-checker bar 1 is mounted.

As for the door-checker harness 25, the door-checker bar 1 made of metal or hard synthetic resin has stiffness. Therefore, in contrast to a conventional technology, in which a door-checker bar is inserted through a bent grommet, the busbar 6 is simply inserted and arranged in the empty space 7 and the connector 18 at the door harness-side is fit to the connector 9 at the opposite end, thereby the door-checker harness 25 can be easily mounted to the door and the door can be made as a module.

Consequently, since the door-checker harness 25 as a module can be mounted to the door 4, a conventional time-consuming insertion work of a wiring harness into a grommet and penetration work of a grommet through the door become unnecessary, thereby the workability during the assembly is improved. Further, the busbar 6 is integrated with the door-checker bar 1 and mounted therein, thereby the workability of the busbar mounting is improved and the productivity of the vehicle can be significantly improved.

When the door made as a module is sent into an assembly line of a vehicle and mounted on the vehicle body, the electric connection can be completed only by simple works that one end of the door-checker bar 1 is inserted into the insertion hole 10 and the connector 20 at the vehicle body harness-side is fit to the connector 8 at the one end, without doing such works that the grommet is press-fit and mounted to the insertion holes 10 and 11 and that the harness is inserted through the grommet. Therefore, the mounting workability of the busbars 6 onto the vehicle body can be significantly improved and the assembly work of the vehicle can be effectively done as a whole.

Further, the busbar 6 is received in the door-checker bar 1 and protected from the outside, and each end of the door-checker bar 1 is inserted in the corresponding insertion hole 10 or 11, thereby preventing a door lock from abruptly being released due to an intentional short circuit of the circuit conductors done from a gap of the grommet by using a special tool such as a wire, that is, preventing a vehicle robbery.

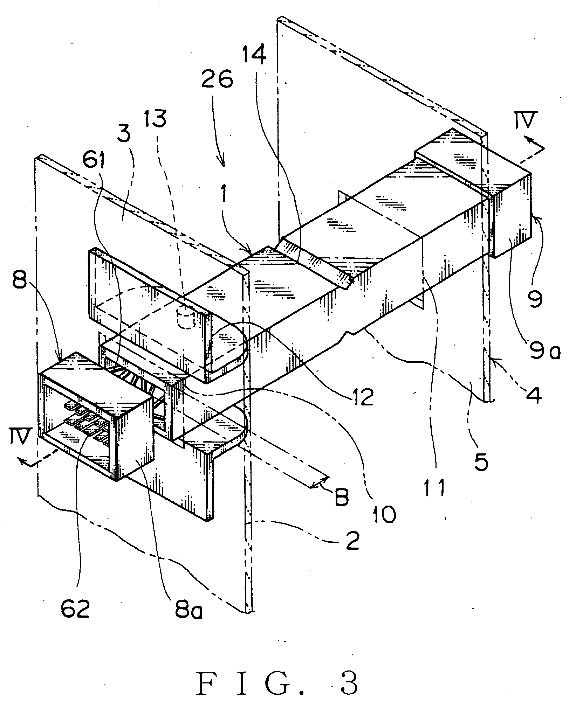

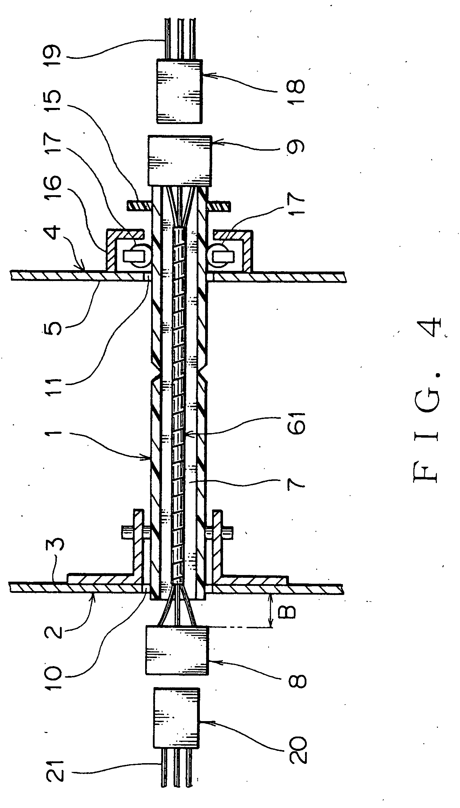

In the following, a second preferred embodiment of a door-checker harness according to the present invention will be explained with reference to Figs. 3 and 4.

Figure 3 is a perspective view illustrating the second preferred embodiment of a door-checker harness according to the present invention. Figure 4 is a cross sectional view illustrating a mounted state of the door-checker harness taken along IV - IV line in Fig. 3.

The same reference numeral is used for each member if such a member in the second preferred embodiment is identical with or similar to that in the first preferred embodiment, and a detailed explanation of such a member is omitted.

The second preferred embodiment is different from the first preferred embodiment in points that wires 61 are used instead of the busbars 6 and the connecter 8 at the one end is not mounted to the door-checker bar 1 but set to float in a state that a distance B from one end of the door-checker bar 1 from an end of the connector 8 at the one side is very short. The other construction of the second preferred embodiment is the same as that of the first preferred embodiment.

That is, in the second preferred embodiment, each wire 61 is inserted into the door-checker bar 1, and a connector 8 and a connector 9 are connected to the respective ends of the wire 61, thereby a door-checker harness 26 is constructed. A plurality of wires 61 may be rolled to be a tape as shown in the figure or may not be rolled to be a tape since they are protected inside the door-checker bar 1.

Each end of the wire is connected to a male terminal 62 in the connector housing 8a or 9a by means of crimping or the like. Preferably, the wire 61 is an insulator-coated wire to secure the insulation among the wires 61. If a wire consisting of only a conductor is used as the wire 61, partition walls (not shown) or the like are necessary to secure the insulation among the wires 61 in the door-checker bar 1. The male terminal 62 is fixed to the connector housing 8a or 9a by means of press-fitting or locking.

With the construction of the second preferred embodiment, in addition to the effects of the first preferred embodiment, when the connector 8 at the one end is fit to the connector 20 at the vehicle body harness-side, the fitting can be carried out with bending the wires 61 a little due to the existence of the distance B, thereby making the fitting work to be easy. Further, when there is no necessity to handle a large current by using busbars 6, the wires 61 can be used to make the system light and to make the electric circuit dense.

The aforementioned preferred embodiments are described to aid in understanding the present invention and variations may be made by one skilled in the art without departing from the spirit and scope of the present invention.

For example, the above preferred embodiments explains a case that the present invention is applied to a side door. Instead, the present invention also can be applied to a rear door of an one-box motor vehicle, trunk lid, door of a box-shaped trunk of a cargo truck, and so on.

In the first preferred embodiment, the connector 8 at the one end and the connector 9 at the opposite end are fixed to the respective end of the door-checker bar 1. Instead, like the connector 8 at the one end in the second preferred embodiment, at least one of the connectors 8 and 9 may be kept away from an end of the door-checker bar 1 to make it in a free state.

In the second preferred embodiment, the connector 9 at the opposite end may not fixed to the door-checker bar 1 and may be floated like the connector 8 at the one end. Further, the connector 8 at the one end may be fixed to the door-checker bar 1.

The circuit conductor may be a flat wire such as a film-shaped wire, instead of the busbar 6 or wire 61.

Further, an assembling sequence of the door-checker bar 1, to which the busbar 6 or wire 61 is mounted, onto the door 4 or the vehicle body 2 is not limited the sequence described in the above preferred embodiments.

## Claims

1. A door-checker harness comprising a door-checker bar, one end of which is pivotally supported by a door-facing side of a vehicle body while an opposite end of which is inserted through an empty space of the door so as to regulate the maximum opening ratio of the door, wherein the door-checker bar is formed to be a cylinder having open both ends and circuit conductors for electrically connecting a harness at the vehicle body-side to a harness at the door-side are arranged inside the door-checker bar.

2. The door-checker harness according to claim 1, wherein the one end of the door-checker bar is inserted in a through hole at the door-facing side.

3. The door-checker harness according to claim 1 or 2, wherein one side of the circuit conductors is provided with a connector to be connected to a connector at the vehicle body harness-side while an opposite side of the circuit conductors is provided with a connector to be connected to a connector at the door harness-side.

4. The door-checker harness as claimed in any one of claims 1 - 3, wherein the circuit conductors consist of busbars.

5. The door-checker harness according to claim 4, wherein the connectors provided at both sides of the busbars are mounted on the door-checker bar.

6. The door-checker harness as claimed in any one of claims 1 - 3, wherein the circuit conductors consist of electric wires.

7. The door-checker harness according to claim 6, wherein a connector provided at one end of the wires is mounted on the door-checker bar while a connector provided at an opposite end of the wires is parted away from the door-checker bar.
